(19) **Europäisches Patentamt**
**European Patent Office**
**Office européen des brevets**

(11) Veröffentlichungsnummer : **0 014 346**
**B1**

(12) **EUROPÄISCHE PATENTSCHRIFT**

(45) Veröffentlichungstag der Patentschrift :
09.06.82

(51) Int. Cl.³ : **B 65 D 65/22, B 29 C 27/00,**
**A 22 C 13/00**

(21) Anmeldenummer : 80100214.8

(22) Anmeldetag : 17.01.80

(54) Gekuppelte Schlauchhülle, Verfahren zu ihrer Herstellung, Vorrichtung zur Ausübung des Verfahrens und Verwendung der Schlauchhülle als Verpackungsmittel.

(30) Priorität : 27.01.79 DE 2903117

(43) Veröffentlichungstag der Anmeldung :
20.08.80 (Patentblatt 80/17)

(45) Bekanntmachung des Hinweises auf die Patenterteilung : 09.06.82 Patentblatt 82/23

(84) Benannte Vertragsstaaten :
AT BE DE FR NL

(56) Entgegenhaltungen :
DE - A - 2111 878
DE - C - 141 054
DE - C - 679 748
FR - A - 2 262 776
FR - A - 2 263 383
FR - A - 2 322 732
GB - A - 171 508
US - A - 3 112 516
US - A - 3 121 655
US - A - 3 158 492
US - A - 3 503 093
US - A - 3 799 823

(73) Patentinhaber : Wolff Walsrode Aktiengesellschaft
Postfach
D-3030 Walsrode (DE)

(72) Erfinder : Huhn, Helmut, Dr.
Nordsunderberg 13
D-3030 Walsrode 1 (DE)
Erfinder : Kaiser, Siegfried
Niefelfeld 6
D-3030 Walsrode 1 (DE)

(74) Vertreter : Gremm, Joachim, Dr. et al
Bayer AG c/o Zentralbereich Patente, Marken und Lizenzen
D-5090 Leverkusen 1, Bayerwerk (DE)

Imprimerie Jouve, 18, rue St-Denis, 75001 Paris, France

# 0 014 346

### Gekuppelte Schlauchhülle, Verfahren zu ihrer Herstellung, Vorrichtung zur Ausübung des Verfahrens und Verwendung der Schlauchhülle als Verpackungsmittel

Die Erfindung betrifft eine gekuppelte Schlauchhülle, mit einem zwei benachbarte nahtlose oder nahthaltige Schlauchhüllenendstücke haftfest verbindenden Kupplungsstück, das zwei nebeneinander verlaufende Hüllenendstückkanten auf der Schlauchhülleninnenseite überlappt.

Aus der DE-A-2 111 878 sind solche gekuppelten Schlauchhüllen bekannt, bei denen 2 nebeneinander verlaufende Hüllenendstückkanten mit einem Kupplungsstück an der Innenseite des Schlauches haftfest verbunden sind.

Aus der FR-A-2 322 732 ist eine gekuppelte Schlauchhülle zu ersehen, bei welcher zum Beispiel gemäß der dortigen Figuren 1 und 2 zwei Schlauchhüllenendstücke ineinandergesteckt werden und die so erzeugte Steckkupplung in eine schützende Folien-Banderole eingeschlagen wird. Alternativ kann man jedoch auch, wie aus den dortigen Figuren 3 und 4 zu ersehen ist, die zu verbindenden Schlauchfolienstücke nicht ineinander stecken, sondern lediglich ohne Einstecken gegeneinander führen und dann die sich berührenden Schlauchhüllenendkanten überlappend wiederum mit einer Schlauchhüllen-Banderole schützend einschlagen.

Bei diesen bekannten Schlauchhüllenkupplungen liegen zur Schlauch lumen-Laufrichtung transversale Schnitte und transversale Manschetteneinschläge vor. Schon die aus Figur 13 der FR-A-2 322 732 ersichtliche Verwendung derartiger gekuppelter Schlauchhüllen Herstellung von Raffdärmen dürfte für den Fachmann je nach Dicke und Flexibilität der Schlauchhüllen nicht ganz problemlos sein. Mit Sicherheit sind derartig gekuppelte Schlauchhüllen aus relativ empfindlichen Hüllenmaterial nur schwer zu verwenden, wenn man diese Schlauchhüllen mit zu verpackenden pastösen Gütern füllt und im prallfesten Zustand eine « Darmbremse » passieren läßt. Hier werden — für den Fachmann bekannt — die gefüllten Hüllen durch ein verengtes, jedoch flexibles Lumen geführt und die Hüllen an ihrem äußeren Umfang gebremst, damit sie nur verzögert dem durch die Fülltülle auf das Schlauchinnere mittels eingefüllter pastöser Güter wirkenden Innendrucks « entgehen » können. Die hierbei auftretende erhebliche Belastung des Schlauchhüllenmaterials hat bei Verwendung von an sich bekannten Schlauchhüllenkupplungen zum Beispiel der vorgenannten Art stets dazu geführt, daß bei nicht besonders robusten Schlauchhüllen diese an den Kupplungsstellen aufreißen und damit den meist taktorientiert kontinuierlichen Füllvorgang für einige Zeit unterbrechen. Verwendet man, was mit Rücksicht auf eine optimale Nutzung der Schlauchhüllenverwendung häufig vorkommt, in kürzeren räumlichen Abständen gekuppelte Schlauchhüllen, bricht jedesmal an der Kupplungsstelle der taktorientierte Füllvorgang zusammen.

Aus den vorgenannten Gründen hat man daher nach zahlreichen Versuchen Abstand genommen, gekuppelte Schlauchhüllen im o.a. Sinn zu verwenden.

Man ist daher bis heute gezwungen, den größten Teil derartiger gekuppelter Schlauchhüllen vor deren Auslieferung meist in Form von sogenannten Raffraupen an den Weiterverarbeiter, nochmals zu sichten und eventuelle Schlauchkupplungen herauszuschneiden. Hierdurch ergeben sich mit der Zeit ganz erhebliche Abfallmengen, welche oft zu einer unerwünschten Verteuerung und Erschwerung der Schlauchhüllenproduktion führen. Bisher war es jedoch nur auf diese Weise möglich, die ärgerlichen häufigen Füllunterbrechungen durch Schlauchkupplungsstellenbrüche insbesondere in der « Darmbremse » zu vermeiden. Man kann diese qualitativen Hinweise auch in etwa quantitativ belegen. Die Herstellung der Schlauchhüllen erfolgt nämlich aus fertigungstechnischen Gründen in endlichen Längen von 10 bis ca. 20 m. Diese lassen sich bis auf einige Dezimeter durch Fältelung zu sogenannten, vom Markt sehr gewünschten Raffraupen komprimieren. Die Länge der Raffraupe wiederum wird bei ihrer Weiterverarbeitung zu gefüllten Schlauchhüllen durch die geometrischen Erfordernisse der hierbei eingesetzten automatisch, portionsweise arbeitenden Füll- und Schließmaschinen bestimmt. Da die vorstehend genannten Fertigungslängen nicht exakt ein ganzteiliges Vielfaches der gewünschten Raffraupen ergeben, sind Schlauchverbindungsstellen nötig, die gemäß vorstehend beschriebenem Stand der Technik ausgeführt werden. Die Kupplungsmanschetten bestehen meist aus Klebebändern. Hierdurch ergibt sich jedoch häufig eine etwa dreifache Verdickung der Schlauchhülle, wodurch es zu den oben beschriebenen nachteiligen Abrissen bei der Weiterverarbeitung kommt. Wenn man zum Beispiel zwei Fertigungslängen einer Schlauchhülle von 100 bis 120 m zu Schlauchraupen von je 20 m Ursprungsschlauchlänge rafft, bedeutet dies, daß von diesen 100 bis 120 m Ursprungsfertigungslänge ca. 10 Raffraupen ohne Kupplungsstücke erhalten werden können, jedoch eine Raffraupe mit einer Schlauchkupplung versehen sein muß. Aus vorgenannten Gründen ergibt sich so statistisch etwa 10 % Abfall.

Daher war man interessiert eine Schlauchkupplung zu schaffen, die die vorgenannten Nachteile nicht aufweist und somit bei der Weiterverarbeitung nicht nur den Belastungen durch die sogenannte « Darmbremse », sondern auch anderen Folgebelastungen ohne weiteres gewachsen ist. Selbst wenn nämlich wider Erwarten eine handelsübliche Schlauchkupplung die Darmbremsen-Belastung aushält, kann die Kupplung bei verschiedenen Weiterverarbeitungsstadien der gefüllten Schlauchhülle immer noch verletzt werden, insbesondere bei der schlauchhüllenbelastenden Abbindung oder dem sogenannten « Clipvorgang », wodurch die zunächst nur einseitig verschlossene gefüllte Schlauchhülle auch an ihrer zweiten Seite geschlossen wird. Weitere Belastungen treten bei dem je nach Art des Schlauch-

2

hüllenfüllgutes notwendigen sogenannten « Brühen » mit anschließendem Abschrecken und Schrumpfen durch Trocknung der Hülle auf. Das sogenannte « Brühen » erfolgt nämlich in Wasser oder in einer Dampfatmosphäre bei 80 °C während einer Dauer von manchmal nicht weniger als einer Stunde, wobei etwaige bereits bei dem Passieren der Darmbremse auftretende Schlauchkupplungsverletzungen sich nachteilig durch Öffnen dieses Kupplungsstückes und damit einem Unbrauchbarwerden dieses gefüllten Schlauchabschnitteils auswirken.

Da außerdem die zur Zeit auf dem Markt befindlichen bzw. bekannten Schlauchhüllenkupplungen infolge ihrer relativ starken Wandverdickung an der Kupplungsstelle eine starke Deformation des Druckklischees beim nachträglichen Bedrucken der Schlauchhülle im Hochdruck verfahren bewirken, wobei die Zurückbildung dieser Druckklischeedeformation eine gewisse Zeit benötigt, wodurch auch durch schlechteren Druck Fehlproduktionsabschnitte auf der Schlauchhülle entstehen, besteht auch aus diesem Grund die Aufgabe der Schaffung einer entsprechend verbesserten Schlauchhülle.

Zur Überwindung dieser Probleme ist erfindungsgemäß die eingangs erwähnte gekuppelte Schlauchhülle dadurch gekennzeichnet, daß die Endkanten der Schlauchhüllenendstücke mit der gedachten Schlauchhüllenachse einen Wickel von 10° bis 80° bilden und daß das Kupplungsstück darstellende Flächengebilde einen zur Schlauchhüllenachse schräg verlaufende Kupplungszonenbereich abdeckt.

Diese erfindungsgemäße Schlauchhüllenkupplung weist also gemäß vorstehender Darstellung eine im Winkel bzw. schräg zur gedachten Schlauchhüllenlängsachse verlaufende Kupplungsnaht auf, wodurch die kupplungsbedingte Dickenprofiländerung zum Beispiel beim Passieren der o.a. « Darmbremse » zu einer in Zeitabhängigkeit nach und nach erst eintretenden Mehrbelastung der die « Bremse » passierenden gefüllten Schlauchhülle führt. Diese somit erfindungswesentliche schräg verlaufende Schlauchhüllenkupplungsnaht ist mit einem wesentlichen weiteren Merkmal insofern verbunden, als im Gegensatz zu den bekannten, o.a. Schlauchhüllenkupplungen die Kupplungsmanschette nicht auf der Außenseite, sondern auf der Innenseite als überlappend hinterlegtes Flächengebilde innerhalb der gekuppelten Schlauchhülle angeordnet ist. Durch diese beiden kombinierten entscheidenden Veränderungen ist es möglich geworden, selbst gegen mechanische Belastungen hochempfindliche Schlauchhüllentypen ohne weiteres mit den erfindungsgemäßen Kupplungen versehen durch « Darmbremsen » zu führen und anschließend weitere Belastungen in Form des Brühens, Abschreckens, Trocknens auf die Schlauchhüllen einwirken zu lassen, ohne daß diese wie bisher an der Kupplungsstelle reißen.

Zweckmäßig verwendet man als innenliegende Flächengebilde-Kupplungsstück-Manschette eine dünne siegelfähige, vorteilhaft als Mehrschichtfolie ausgebildete Einheit, deren Siegelschicht der Siegelschicht der miteinander zu verbindenden bzw. zu kuppelnden Schlauchhüllenendstücke gegenüberliegt. Die Erfindung kann zum Beispiel verwirklicht werden mit zu kuppelnden Schlauchhüllenendstücken, wie sie als Schlauchhülle beschrieben sind in der DE-B-13 02 384, also eine Celluloseregeneratschlauchhülle mit siegelfähiger Innenbeschichtung aufweisen. Diese Schlauchhülle kann auch, wie in der DE-A-25 39 706 beschrieben, pigmentiert sein. Man kann als zu kuppelnde Schlauchhüllen auch außensiegelfähige Schlauchhüllen heranziehen, die gemäß der DE-C-14 79 836 gewendet worden sind, so daß dann die siegelfähige Schicht auf der Innenseite dieser Schlauchhülle angeordnet ist.

Die im Inneren der gekuppelten Schlauchhülle angeordnete Kupplungsmanschette kann in Form eines Flächengebildekupplungsstücks vorteilhaft als Mehrschichtfolie mit mindestens einer Trägerschicht, mindestens einer Siegelschicht und gegebenenfalls wenigstens einer Haftvermittlerschicht ausgebildet sein. Derartige als Kupplungsstück verwendbare Mehrschichtfolien können zum Beispiel einen Materialaufbau zeigen, wie er in der DE-A-19 05 539, der DE-A-19 65 479, der DE-A-24 23 423, der DE-A-20 20 344 oder auch der DE-A-22 09 242 beschrieben ist. Hierbei kann die Substanz der Trägerschicht, aus der die erfindungsgemäße Mehrschicht-Kupplungsmanschette aufgebaut ist, aus einer Gruppe ausgewählt sein, zu der die üblichen bekannten Polyamide, zum Beispiel 6-Polyamid, 6,6-Polyamid, 6-11 Polyamid, oder aber auch andere Polyamidverbindungen gehören, wie sie zum Beispiel in der DE-A-17 70 406, DE-A-18 16 509, DE-A-19 03 266 und der DE-A-19 44 619 beschrieben sind. Andere geeignete Trägerfoliensubstanzen für die innenliegende Kupplungsmanschette stellen zum Beispiel Polyolefine dar, wie sie in Verbindung mit Haftvermittlern zum Beispiel in der DE-A-16 46 200 und in der DE-C-20 34 257 beschrieben sind. Darüberhinaus sind jedoch auch Träger aus Polyäthylenterephthalaten, Polycarbonaten und anderen Substanzen zu verwenden. Bevorzugt sind jedoch Träger aus Polyamiden in Form ihrer Homo- und Copolymeren. Zweckmäßig sind die einander gegenüberliegenden Siegelschichten einerseits der innenliegenden Kupplungsmanschette und andererseits der außenliegenden zu kuppelnden Schlauchhülle ausgewählt aus einer Gruppe von Substanzen, zu denen Nitrocellulose und Polyäthylen, wie sie in der bereits zitierten DE-B-13 02 384 beschrieben sind, gehören. Bevorzugt sind jedoch als siegelnde Substanzen Homo- und/oder Copolymerisate, gegebenenfalls in Abmischung mit anderen Substanzen aus Polyvinylidenhalogeniden. Derartige Polyvinylidenhalogenide sind zum Beispiel beschrieben in der DE-B-16 46 200, DE-A-16 45 676, DE-C-16 69 069, DE-A-16 69 070, DE-C-19 45 970, DE-A-20 20 344, DE-C-20 34 257, DE-A-24 23 423 und DE-A-27 25 586.

Sofern man aus bestimmten Gründen nicht eine gleich mit haftvermittelnden Substanzen versetzte Siegellackschicht verwenden will, kann man auch stattdessen als Siegelschicht für die gekuppelte Schlauchhülle eine Substanz verwenden, die nur auf einer besonderen, zwischen der Siegelschicht und der Trägerschicht befindlichen Verankerungsschicht haftet. Diese daher auch als Haftvermittlerschicht bezeichnete Zwischenschicht kann aus Substanzen bestehen, die aus einer Gruppe ausgewählt sind, zu der Carbonsäureamid-N-Methylolderivate, Polyacrylverbindungen, Polyäthylenimin-Kondensate, Melamin-Formaldehydkondensate und Harnstoff-Formaldehydkondensate gehören. Im übrigen sind derartige, im Rahmen der vorliegenden Erfindung verwendbare Haftvermittlersubstanzen sowohl als Komponenten von sogenannten « Einstrich »-Lacken wie auch als Komponenten von sogenannten « Zweistrich »-Lacken in der Literatur beschrieben, in der DE-B-13 02 384, DE-A-14 71 730, DE-A-15 94 317, DE-B-16 46 200, DE-A-16 69 069, DE-C-16 69 070, DE-A-20 20 344, DE-A-22 09 242, DE-A-24 23 423 und DE-A-27 25 586.

In einer speziellen Ausführungsform des Erfindungsgedankens liegt die gekuppelte Schlauchhülle so vor, daß bei noch flachliegender Hülle die Kupplungsstückfolie als sogenannte « Doppelmehrschichtfolie » mit zwei innenliegenden, durch ein lösbares Haftmittel zum Beispiel in Form eines an sich handelsüblichen Paraffinöls verbundenen Trägerschichten und darauf einander abgewendet angeordneten, außenliegenden, Siegelschichten ausgebildet ist. Bei dieser Anordnung wird die nicht auszuschließende Rollneigung der Mehrschichtfolien infolge der Dublierung stark herabgesetzt oder sogar beseitigt werden.

Wenn auch die Erfindung grundsätzlich mit gekuppelten Schlauchhüllen verwertbar ist, bei der die nebeneinander verlaufenden Hüllenendstückkanten mit der gedachten Schlauchhüllenachse einen Winkel von 10-80° bilden, ist im Rahmen dieser Erfindung ein entsprechender Winkel von 30-60 und besonders ein Winkel von 40-50° oder sogar 45° bevorzugt. Zweckmäßig ist dabei, wenn das Kupplungsfolienstück ein Gebilde mit annähernd parallelogrammförmiger Oberflächenausdehnung darstellt und von den Folienseitenkanten eingeschlossene Eckwinkel aufweist, deren Winkelbeträge denjenigen entsprechen oder sie zu 180° ergänzen, die die durch Hüllenendstückkanten mit der gedachten Schlauchhüllenachse gebildeten Winkel aufweisen. Werden nämlich derartige geometrische Formen beachtet, fluchten die Kanten der innenliegenden Kupplungsmanschette mit den Hüllenendstückkanten, wodurch je nach der Stabilität des für die innenliegenden Kupplungsmanschetten gewählten dünnen Flächengebildematerials die Breite der Kupplungsmanschette kostensparend relativ klein gehalten werden kann.

Im übrigen zeichnet sich die vorstehende erfindungsgemäße gekuppelte Schlauchhülle wegen der sich gegenüberliegenden Siegelschichten von zu kuppelnder Schlauchhülle und Kupplungsmanschette durch eine hohe Bindefestigkeit und damit durch eine große Haltbarkeit aus, weswegen der Erfindungsgegenstand, wie bereits weiter oben angeführt, hervorragend für die Weiterbehandlung derartig gekuppelter Schlauchhüllen bei deren Füllung und Veredlung geeignet ist. Auch starke mechanische oder lang andauernde thermische Beanspruchungen übersteht die erfindungsgemäß gekuppelte Schlauchhülle wesentlich günstiger als die bisher bekannten gekuppelten Schlauchhüllen.

Wenn auch der Aufbau der vorgenannten erfindungsgemäßen gekuppelten Schlauchhülle hinsichtlich seiner Herstellung nicht an ein bestimmtes Verfahren gebunden ist, so verfährt man vorzugsweise bei der Herstellung der erfindungsgemäß gekuppelten Schlauchhülle in der Weise, daß zunächst aus 1. einer gegebenenfalls coronavorbehandelter Polymerfolienträgerschicht, aus 2. einer darauf geschichteten üblichen Haftvermittlerschicht und aus 3. einer darauf gegebenenfalls aus Dispersion oder aus Lösung darauf aufgebrachten siegelfähigen Deckstrichschicht eine somit siegelfähig gestaltete Mehrschichtfolie gebildet wird. Diese Mehrschichtfolie kann entweder in dieser einseitig siegelfähigen Form vorliegen oder aber sie wird trägerfolienseitig mit einem üblichen lösbaren Haftmittel zum Beispiel in Form eines Paraffinöls belegt. Damit entsteht dann aus zwei ursprünglich nur einseitig siegelfähigen Folien eine einzige, dafür aber beidseitig siegelfähige Folie in Form einer sogenannten « Duplofolie ». Die so hergestellte Folie wird dann entweder in ihrer einseitig siegelfähigen oder in ihrer beidseitig siegelfähigen Form in sogenannte Kupplungsfolienstücke geeigneter Breite zerlegt. Auf ein derartiges vereinzeltes Kupplungsfolienstück wird dann von jeder der beiden möglichen Seiten je ein miteinander zu verbindendes, innen siegelfähiges Schlauchhüllenendstück, dessen Kanten planparallel zugeschnitten worden sind, aufgeschoben, bis die beiden parallelfluchtenden Schlauchhüllenendstückkanten aneinanderstoßen. Hierauf werden die betreffenden Schlauchhüllenendstücke auf das darunterliegende Kupplungsfolienstück gegebenenfalls unter Anwendung von Druck und/oder Wärme aufgesiegelt. Durch die beidseitig der schräg über die zu kuppelnden Schlauchhüllenenden verlaufende Kupplungskante erfolgende Flächensiegelung werden die drei Ausgangshüllenkomponenten zu einer einzigen erfindungsgemäßen gekuppelten Schlauchhülle verbunden.

Ist man von einem nur einseitig siegelfähigen Schlauchhüllenkupplungsstück ausgegangen, muß dieses in seiner Länge dem gesamten inneren Umfang der zu kuppelnden Schlauchhüllen entsprechen. Bei Verwendung einer wie vorstehend beschriebenen sogenannten « Dublierten Folie » genügt dagegen ein Schlauchhüllenkupplungsstück, welches eine Ausdehnung besitzt, die lediglich der Hälfte des inneren Umfangs der beiden zu kuppelnden Schlauchhüllenendstücke entspricht.

Eine derartige Duplofolieninnenmanschette besitzt den Vorteil geringerer Abmessungen, sie läßt sich einfacher in die Folienendstücke einpassen und trennt sich bei der nachfolgenden Weiterverarbeitung der Schlauchhülle beim Aufblasen derselben leicht auf. Wie bereits bei der vorstehenden Beschreibung des erfindungsgemäßen Produktes erörtert, werden als Trägerschichtkomponente des Kupplungsfolienstücks vorzugsweise 6,6-Polyamid, Polycaprolaktam, 11-Polyamid, 12-Polyamid, Polyäthylenterephthalat, Polypropylen und Celluloseregenerat mit und ohne Faserverstärkung verwendet.

Als Siegelschichtkomponente des Kupplungsfolienstücks wird bevorzugt Polyvinylidenchlorid und Polyvinylidenflurid sowie deren Copolymerisate, Nitrocellulose und Polyäthylen eingesetzt. Als eventuelle zusätzlich einzubringende Haftvermittlerschichtkomponente des Kupplungsfolienstücks wird bevorzugt Carbonsäureamid-N-Methylolderivate, Polyacrylverbindungen, Polyäthylenimin-Kondensate, Melamin-Formaldehyd-Kondensate und Harnstoff-Formaldehydkondensate verwendet.

Das erfindungsgemäße Verfahren zur Herstellung der für die Kupplungsfolienstücke verwendeten siegelfähigen Mehrschichtfolie läßt sich besonders vorteilhaft ausführen, wenn hierbei die Haftvermittlerschichtkomponente in einer Menge von 0,2-5 g Flächengewicht pro qm Trägerfolienfläche, und die Siegelschichtkomponente in einer Menge von 5-50 g, Flächengewicht pro qm Trägerfolienfläche, in an sich üblicher Weise nacheinander auf den Träger aufgetragen und zu einem haftfesten siegelfähigen Lacküberzug auf dem Träger aufgetrocknet verfestigt wird. Zur Erzielung der richtigen Schräglage der Folienkupplung ist zu beachten, daß vor der innenseitigen Hinterlegung der beiden zu verbindenden Schlauchhüllenendstücke durch die Kupplungsfolienstücke die Schlauchhüllen sowohl untereinander wie auch in bezug auf die Kupplungsfolienstücke kantenparallel mit einem Schnittwinkel von 10-80°, bevorzugt 30-60°, besonders vorteilhaft 40-50°, und am besten 45°, bezogen auf die gedachte Schlauchhüllenachse, zugeschnitten werden.

Recht widerstandsfähige gekuppelte Schlauchhüllen erhält man, wenn man nach dem Aufschieben der beiden zu verbindenden Schlauchhüllenendstücke auf das Kupplungsfolienstück die haftfeste Verbindung dieser drei Hüllenkomponenten unter einer Siegeltemperatur von 110-200 °C, einem Siegelanpreßdruck von 1,5-6 atü und einer Siegelzeit von 8-1 Sekunden unter Bildung einer Siegelfläche einer Breite von 10-80 mm zu einer somit fest gekuppelten Schlauchhülle erzielt. Besonders bevorzugt sind hierbei Siegeltemperaturen von 150-190°, Siegelanpreßdrücke von 3-5 atü, Siegelzeiten von 5-3 Sekunden und Siegelflächen mit einer Breite von 30-50 mm.

Sollten sich die zu versiegelnden Oberflächen nicht in einfacher Weise planparallel zusammenlegen lassen, empfiehlt es sich, die Flächeneinsiegelung des Kupplungsfolienstücks in die dadurch verbundenen Schlauchhüllenendstücke erst dann vorzunehmen, wenn vorher eine Punktsiegelung zur räumlichen Zuordnungsfixierung des Kupplungfolienstücks zu den beiden Schlauchhüllenendstücken erfolgt ist.

Das vorstehende erfindungsgemäße Verfahren läßt sich besonders vorteilhaft mit einer zugehörigen, weiter unten noch beschriebenen Vorrichtung ausüben. Die auf diese Weise erzielte erfindungsgemäße gekuppelte Schlauchhülle läßt sich nun z.B. ohne Zwischenschaltung eines handelsüblichen, mit Hilfe von Rafforganen gemäß DE-C-12 53 093 durchgeführten Raffprozesses als Verpackungsmittel zur Herstellung von abgeteilten, gefüllten und dann verschlossenen und vereinzelten Schlauchhüllen, wie dies zum Beispiel in der DE-A-27 21 392 beschrieben ist, einsetzen. Auf Grund der hervorragenden Stabilität der Schlauchhüllenkupplung lassen sich derartig erfindungsgemäß gekuppelte Schlauchhüllen jedoch besonders vorteilhaft auch einem üblichen Schlauchhüllenraffprozeß unterwerfen und dann erst wie üblich, füllen, abteilen und verschließen. Die erfindungsgemäßen gekuppelten Schlauchhüllen lassen sich weiterhin auch zur Herstellung von leeren und/oder gefüllten Schlauchketten, wie dies zum Beispiel in der DE-A-27 32 919 beschrieben ist, verwenden. Die Stabilität der erfindungsgemäßen gekuppelten Schlauchhüllen gestattet auch die einwandfreie Anwendung von Abbindungen, die zwar die Schlauchhülle gegebenenfalls belasten können, aber das in der Hülle verpackte Gut besonders gut schützen, wie dies näher zum Beispiel in der DE-C-23 46 134 oder in der DE-A-25 05 672 beschrieben ist. Selbst Innendruckbelastungen, wie sie bei der Herstellung von Wurstattrappen, näher beschrieben in der DE-A-27 27 271, der Fall ist, werden infolge der Stabilität der erfindungsgemäßen gekuppelten Schlauchhüllen ohne Schaden überstanden. Auch andere als der Ernährung dienende Güter, wie zum Beispiel agressive, für technische Zwecke verwendbare Füllungen, können ohne Schaden in gekuppelten Schlauchhüllen verpackt werden. Auch die je nach Wahl der Schlauchhüllensubstanz mögliche Weiterverarbeitung der Schlauchhüllen zu sogenannten Kranzdärmen, wie dies in der DE-B-23 22 220 beschrieben ist, läßt sich auch mit den erfindungsgemäß gekuppelten Schlauchhüllen einwandfrei durchführen.

Beispiel 1

Es wurde eine Kupplungsfolie hergestellt, in dem man eine 15 μ starke handelsübliche biaxialgereckte Polyamidfolie (beschrieben zum Beispiel in der DE-A-18 16 509 oder der DE-A-19 05 539) zunächst elektrisch mittels Corona-Entladung vorbehandelt. Eine derartige Corona-behandlung läßt sich mit Vorrichtungen verwirklichen, wie sie zum Beispiel beschrieben sind in der DE-C-11 83 232, in der DE-A-16 15-515 sowie in dem DE-U-19 72 580. Auf die so elektrisch vorbehandelte, biaxialgereckte Polyamidfolie wurde dann ein Haftvermittler des Typs Adcote 31 A 37® in einer Menge von 1,5 g/m² auf einer handelsüblichen Lackiermaschine der Firma Jagenberg in Düsseldorf aufgetragen und zum Schluß wiederum mit der gleichen Lackiermaschine der Deckstrich in Form einer wäßrigen Polyvinylidenchlorid-Copolymerisatdispersion des Typs Ae 17® (Wolff Walsrode AG, hergestellt nach DE-C-20 34 257) aufgetragen und zu einem Siegellack mit einem Flächengewicht von 20 g pro qm aufgetrocknet.

Die so erzeugte Schlauchhüllenkupplungsfolie besaß eine Gesamtdicke von 30 μm und wurde in geeignete Schrägschnittflächengebildekupplungsstücke mit einem Schnittwinkel von 45° und einer Streifenbreite von 36 mm (Parallelogrammkantenabstand) geschnitten.

Gesondert hiervon wurden gleichzeitig zwei durch Kupplung zu verbindende Enden einer Schlauchhülle aus faserverstärkter regenerierter Cellulose mit PVDC-haltiger Innenlackierung, wie sie zum Beispiel in der DE-B-13 02 384 beschrieben ist, mit einem Kaliber von 60 mm Durchmesser und einer Wanddicke von 100 μm flachgelegt und die flachgelegten Schlauchenden im Winkel von ebenfalls 45° schräg geschnitten. Die entsprechend der Diagonalen des 45°-Schnittes der zu verbindenden Schlauchhülle aus der Kupplungsfolie spiegelbildlich parallelogrammförmig ausgeschnittenen und 36 mal 94,2 mm großen Folienstücke wurden nun mit der Trägerfolienseite flach aufeinander bündig gelegt, je zur Hälfte in je ein zu kuppelndes Schlauchhüllenende eingelegt und mit einem Druck von 392 266 Pa (4 atü) bei 170 °C 4 Sekunden lang mit Hilfe einer umgebauten und im Rahmen der späteren Vorrichtungsbeschreibung näher skizzierten Siegelvorrichtung der Firma Joisten und Kittenbaum des Ursprungstyps PF 250 unter Bildung einer Siegelfläche von 19 cm² flächenversiegelt. Auf diese Weise wurde eine Schlauchhülle mit im Abstand von 1,50 m angeordneten mehreren erfindungsgemäßen Kupplungen hergestellt. Die so mehrfach gekuppelte Schlauchhülle wurde in handelsüblicher Weise zu einer Raffraupe gerafft und anschließend 15 Minuten in 35 °C warmem Wasser gewässert.

Die gewässerte erfindungsgemäß gekuppelte Schlauchhülle wurde anschließend unter üblichen Verarbeitungsbedingungen mit pastösem Gut auf einer handelsüblichen FCA-Füllmaschine gefüllt. Hierbei wurde ein jeweils 25 cm langes Schlauchhüllenstück auf die entsprechende Fülltülle, die einen Durchmesser von 28 mm besaß, aufgezogen und das Füllgut nach einseitiger Verschließung der Schlauchhülle ans dieser 28 mm Durchmesser aufweisenden Fülltülle bei einer Schneckenumdrehung des Füllsystems von 235 Umdrehungen pro Minute eingefüllt. Hierbei wurde die Schlauchhülle durch die « Darmbremse » durchgedrückt, wobei die Belastung (Federwaagenmessung) ca. 73,6 N (7,5 kp) statisch und ca. 88,3 N (9 kp) dynamisch betrug. Das Füllen von einseitig abgebundenen Schlauchhüllen über einen Fülltüllenrevolver unter Verwendung von Clipautomaten und einer Darmbremse ist offenbart in der DE-A-27 21 392. Im Gegensatz zu bis dahin bekannten Schlauchhüllenkupplungen überstand die erfindungsgemäße Schlauchhüllenkupplung die Darmbremsen-Belastung einwandfrei. Die erfindungsgemäße Kupplung überstand auch den nachfolgenden Brüh- oder Kochprozeß, der im Dampfbad bei 80 °C eine Stunde lang stattfand. Selbst die danach erfolgende Abschreckung in kaltem Wasser und die Lufttrocknung, die erhebliche Flexibilität der Schlauchhülle auch in bezug auf das Verhalten des verpackten Gutes voraussetzt, konnte die Kupplungsnaht nicht nachteilig beeinflussen. Im übrigen zeigte die Nahtstelle keine Einschnürung. Damit ist auch eine herborragende Kalibertreue gesichert. Nähere Angaben über das Verhalten der erfindungsgemäßen Kupplung unter obigen Belastungen sind aus den weiter unter folgenden Tabellen zu entnehmen.

### Beispiel 2

Die Herstellung und Verwendung der erfindungsgemäßen gekuppelten Schlauchhülle erfolgte in gleicher Weise wie in Beispiel 1, jedoch mit der Abänderung, daß statt der einseitig siegelfähigen Kupplungsstückfolie nunmehr eine zweiseitig siegelfähige Duplofolie im Sinn vorstehender Beschreibung eingesetzt und verwendet wurde. Alle übrigen Daten sind die gleicher wie in Beispiel 1. Das erfindungsgemäße Verfahren konnte jedoch noch vereinfacht werden, weil die bei nur einseitig siegelfähigen Kupplungsstückfolien gelegentlich zu beobachtende Aufrollneigung bei der Duplofolie weitgehend beseitigt ist und durch die so erzielte hervorragende Planparallelität eine erleichterte Verwendung dieser Duplofolie im erfindungsgemäßen Sinn möglich ist.

In der folgenden Tabelle werden als Vergleich eine Probe A, die eine handelsübliche Schlauchhülle, hergestellt gemäß DE-B-13 02 384, darstellt, einer Probe B, die eine erfindungsgemäße gekuppelte Schlauchhülle darstellt, gegenübergestellt. Die Gegenüberstellung bezieht sich auf die für die Weiterverarbeitung im obigen Sinn zu beachtenden Parameter einer Steifheit und eines Elastizitätsmoduls.

Diese Steifheit wird in Milli-Newton pro mm ausgedrückt S[mN/mm].

Der Elastizitätsmodul wird in Kilo-Newton ausgedrückt und zwar pro qmm : E[kN/mm²] und wird anhand der Biegung festgestellt. Sowohl die Steifheit wie der Elastizitätsmodul werden jeweils anhand eines trockenen Probestücks und anhand eines gewässerten Probestücks gemessen.

Sowohl die Steifheit (A trocken, B naß) wie auch der Elastizitätsmodul (A trocken, B naß) werden jeweils mit ihrem Mittelwert ($\bar{x}$) wie auch mit der Standardabweichung (s) angeführt.

In der gleichen Tabelle werden nun die ermittelten Werte für Steifheit S und für Biegung in Form des Elastizitätsmoduls E in das Verhältnis gesetzt, indem die Werte der handelsüblichen ungekuppelten erfindungsgemäßen Schlauchhülle ins Verhältnis gesetzt werden. Am Ende der Tabelle finden sich die Verhältnisse « naß » zu « trocken » und zwar sowohl im Hinblick auf die Steifheit wie auch im Hinblick auf den Elastizitätsmodul sowohl der handelsüblichen ungekuppelten normalen Schlauchhülle wie auch der erfindungsgemäß gekuppelten Schlauchhülle.

Probe A :

Schlauchhülle nach DE-B-1 302 384, ungekuppelt :

Probe B :

Schlauchhülle gemäß DE-B-1 302 384, jedoch in ihrer Ausführung als erfindungsgemäß gekuppelte Schlauchhülle :

| | | |
|---|---|---|
| Steifheit trocken Mittelwert aus 10 | 43,3 | 161 |
| Steifheit trocken Standardabweichung S | 13,2 | 14 |
| Steifheit S naß Mittelwert | 17,3 | 47 |
| Steifheit S naß Standardabweichung | 2,8 | 6,7 |
| E-Modulbiegung trocken Mittelwert | 0,84 | 1,267 |
| E-Modul trocken Standardabweichung | 0,25 | 0,109 |
| E-Modul naß Mittelwert | 0,205 | 0,255 |
| E-Modul naß Standardabweichung | 0,033 | 0,063 |

Aus vorstehender Tabelle ergibt sich eindeutig, daß die gemäß vorstehendem Beispiel 1 hergestellte erfindungsgemäße gekuppelte Schlauchfolie selbst im Vergleich zu der gleichen Schlauchfolie, jedoch ohne Kupplungen relativ günstige Werte zeigt. Die Steifheit der trockenen gekuppelten Folie nimmt nur um das 3,7-fache zu, sie beträgt bei der nassen, also gewässerten entsprechenden Folie nur noch das 2,7-fache der « ungekuppelten Normalfolie ». Derartig günstige Werte konnten bei Vergleichsversuchen mit einer nach dem vorstehend zitierten Stand der Technik gefertigten Kupplungsfolie nicht annähernd erzielt werden. Eine mit bekannten Kupplungsstücken versehene, sonst aber an sich gleiche Schlauchhülle zeigt eine Zunahme der Steifheit in trockenem Zustand gegenüber einer nicht mit Kupplungen versehenen Vergleichsfolie um das 9,6-fache, selbst im nassen Zustand beträgt ihre Steifheit nach Wässerung noch das 9-fache gegenüber der Steifheit einer ungekuppelten Folie. Dies ist ein ganz erheblicher und zu dem nicht erwarteter und überraschender technischer Forstschritt.

Die Überlegenheit der erfindungsgemäß gekuppelten Schlauchhülle gegenüber den gleichen Schlauchhüllen, die jedoch mit handelsüblichen Kupplungen versehen worden sind, zeigte sich Außerdem bei vergleichenden Füllversuchen auf Vorrichtungen gemäß der DE-A-27 21 392. Während von sechs handelsüblich gekuppelten Schlauchhüllen bereits in der Darmbremse fünf Abrisse zeigten, blieben von den sechs erfindungsgemäß gekuppelten Schlauchhüllen unter den gleichen Bedingungen in der Darmbremse alle sechs Kupplungen erhalten.

Der zur Schlauchhüllen-Achsenlaufrichtung im Winkel schräg verlaufende Kupplungszonenbereich führt beim Darmbremsen-Durchlauf zu einer nur sehr flach ansteigenden, dem Dickenprofilanstieg entsprechenden Belastung.

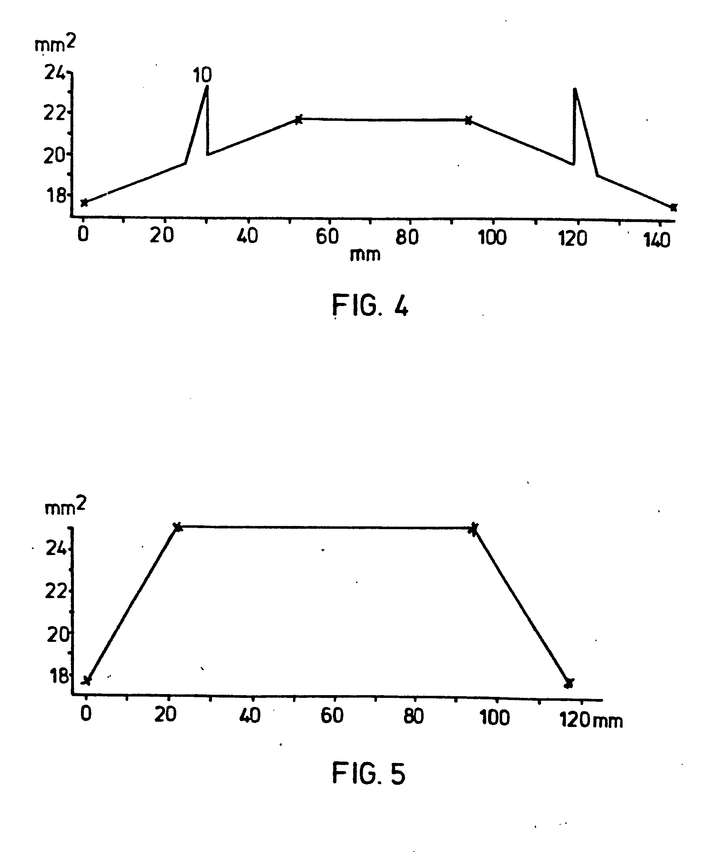

In Fig. 4 wird eine Dickenprofilskizze der erfindungsgemäßen gekuppelten Schlauchhülle gezeigt, indem auf der Ordinate der Dickenanstieg von 18 auf 21,5 mm² und auf der Abszisse die Schlauchhüllenlänge von 53 mm aufgetragen ist. 10 entspricht der Überlappungsspitze. Die damit auf die Schlauchhülle in der Darmbremse wirkenden Zugkräfte sind somit wesentlich günstiger als bei den aus dem Stand der Technik ersichtlichen, quer zur gedachten Schlauchhüllenachse verlaufenden und dazu noch auf der Außenseite der Hülle befindlichen Kupplungsmanschetten verteilt, wie das das Dickenprofildiagramm gemäß Fig. 5 zeigt.

Die aus dem Diagramm gemäß Fig. 5 erkennbare erheblich größere Querschnittsflächenzunahme findet auf einem sehr kurzen Schlauchhüllenlängenstück, nämlich auf nur 23 mm Schlauchhüllenlänge statt. Die dadurch in der Darmbremse auf die gekuppelte Schlauchhülle wirkenden plötzlich ansteigenden Widerstandskräfte führen fast immer zu Abrissen im Kupplungsbereich und damit zur Unterbrechung des Füllbetriebs bei Verwendung von handelsüblich gekuppelten Schlauchhüllen.

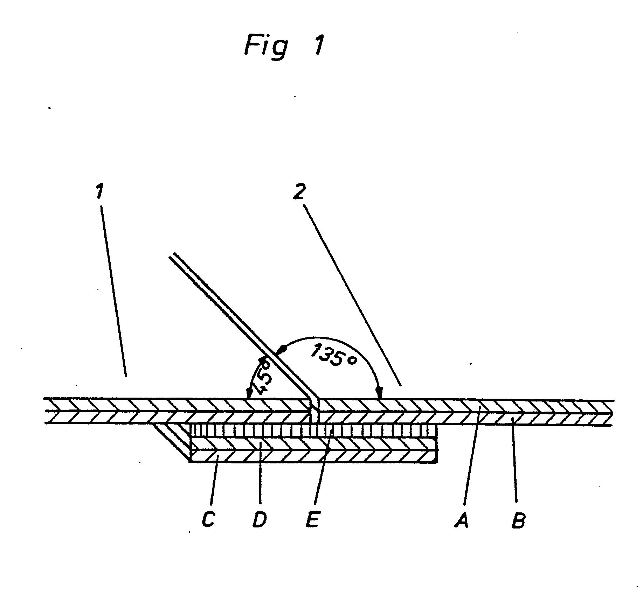

Eine schematische Skizze der erfindungsgemäßen Schlauchhülle ist in Figur 1 dargestellt. Die Schlauchhülle 1 setzt sich zusammen aus den gekuppelten Schlauchhüllenstücken 1 a und 1 b. Sie sind mittels eines parallellaufenden, Stoß an Stoß liegenden Schrägschnitts 2, der unter einem Winkel von 45° verläuft, abgetrennt, jedoch durch die auf der Innenseite der Schlauchhülle angeordnete Kupplungsmanschette miteinander zuverlässig verbunden. Hierbei bedeuten A die faserverstärkte Celluloseregeneratau-Benschicht der Schlauchhülle, B die polyvinylidenchloridhaltige Innenschicht der Schlauchhülle, C die Trägerfolienschicht aus biaxialgerecktem handelsüchen Polyamid der Kupplungsmanschette, D die Verankerungsschicht zwischen Trägerfolie und Schichtfolie der Kupplungsmanachette und E die gegen die PVDC-Innenschicht der Schlauchhülie siegelnde PVDC-haltige Außenschicht der Kupplungsmanschette.

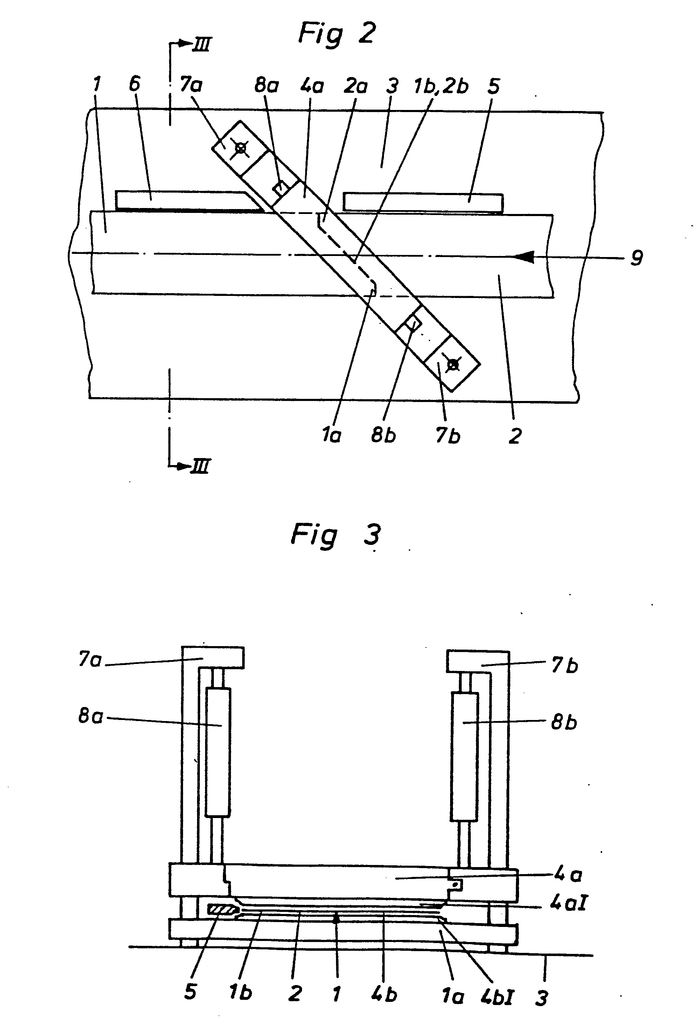

Das erfindungsgemäße Herstellungsverfahren läßt sich zweckmäßig mit einer Vorrichtung ausüben, wie sie in den Figuren 2 und 3 dargestellt ist.

Figur 2 zeigt eine Draufsicht auf die erfindungsgemäß schräg angeordnete Siegelvorrichtung, während Figur 3 einen Schnitt in Figur 2 nach III/III zeigt.

In den Figuren bedeuten :

1 ; 2 : Schlauchhüllenendstücke ;

1 a ; 2 a : Überlappungsnasen der Stücke 1 und 2 ;

1 b ; 2 b : Schlauchschnittkanten der Stücke 1 und 2 ;

3 : Arbeitsplatte ;

4 a ; 4 b : Siegelbacken, davon 4 a aufklappbar ;

4 a I ; 4 b II : Glatte, auswechselbare Leisten innerhalb der Siegelbacken 4 a, 4 b ;

5 : Schlauchführungs-Anschlagleiste, verstellbar :

6 : Schlauchführungs-Anschlagleiste, fest ;

7 a ; 7 b : Ständer ;

8 a ; 8 b : Hydraulisches Siegelbacken-Andruckgerät ;

9 : Förderrichtung der zu kuppelnden Schlauchhülle.

Die aus den Figuren ersichtlichen glatten Siegelbacken von 20 cm Länge gestatten eine Diagonalsiegelung unter einer Schrägdiagonale von 45° bis zum Schlauchhüllenkaliber 75. Die Siegelbacken sind beidseitig beheizt. Das Siegelgerät ist je nach den Anforderungen bis zu 490 332,5 Pa (5 kp pro cm$^2$) einstellbar. Die Siegeltemperatur kann von 100-200 °C in Feineinstellung geregelt werden. Ebenso ist die Siegelzeit bis zu 10 Sekunden regulierbar. Mit Hilfe der vorstehend beschriebenen Siegelgerätes läßt sich das erfindungsgemäße Verfahren in der vorstehend beschriebenen Weise in einfachster Weise schnell durchführen.

Besonders gute gekuppelte Schlauchhüllen wurden erhalten, wenn die Trägerfolie aus biaxialgerecktem geschmeidigem Polyamid bestand, die eine Reißfestigkeit 196,132 N/mm$^2$ (20 kp pro mm$^2$) aufwies. In Verbindung mit den sehr guten Siegelfestigkeiten der Siegelschichten, insbesondere dann, wenn sie aus Produkten gemäß DE-C-20 34 257 hergestellt waren, trugen ebenfalls in Verbindung mit der erfindungsgemäßen Schrägführung der Kupplung zu dem Ergebnis bei, welches es nunmehr erstmals gestattet, in einwandfreier Form gekuppelte Schlauchhüllen insbesondere bei der Wursthülienverarbeitung zu Würsten den vorstehenden Belastungen durch die Einwirkung beim Füllen, Brühen, Garen, Abschrecken und Trocknen dieser Würste auszusetzen, ohne daß Störungen im taktorientlerten Herstellverfahren dieser Würste auftraten.

Eine optimale Dichtigkeit des Schlauchhüllenkupplungsstücks ist gegeben, wenn die innenliegende Manschettenfolie mit sich selbst überlappt angeordnet ist, wobei insbesondere bei der oben angeführten Verwendung eines Haftgleiteinschichtlacks die Manschettenfolie mit sich selbst im Überlappungsbereich besonders gut haftet. Damit schwankt auch bei nie ganz auszuschließenden Kaliber-, d.h. bei Schlauchhüllendurchmesserschwankungen zwar die Breite des Überlappungsbereichs, wovon jedoch bei vorsorglich gewählter optimaler Überlappungsbreite die Dichtigkeit der Schlauchhülle im Kupplungsbereich nicht betroffen ist.

## Ansprüche

1. Gekuppelte Schlauchhülle, mit einem zwei benachbarte nahtlose oder nahthaltige Schlauchhüllenendstücke (1, 2) haftfest verbindenden Kupplungsstück (C, D, E), das zwei nebeneinander verlaufende Hüllenendstückkanten (1b, 2b) auf der Schlauchhülleninnenseite überlappt, dadurch gekennzeichnet, daß die Endkanten der Schlauchhüllenendstücke (1, 2) mit der gedachten Schlauchhüllenachse einen Winkel von 10° bis 80° bilden und daß das Kupplungsstück (C, D, E) darstellende Flächengebilde einen zur Schlauchhüllenachse schräg verlaufenden Kupplungszonenbereich abdeckt.

2. Gekuppelte Schlauchhülle nach Anspruch 1, dadurch gekennzeichnet, daß das Flächengebilde eine siegelfähige Folie darstellt.

3. Gekuppelte Schlauchhülle nach Ansprüchen 1 und 2, dadurch gekennzeichnet, daß das Flächengebilde eine Mehrschichtfolie mit mindestens einer Trägerschicht, mindestens einer Siegelschicht und gegebenenfalls wenigstens einer Haftvermittlerschicht darstellt.

4. Gekuppelte Schlauchhülle nach Ansprüchen 1 bis 3, dadurch gekennzeichnet, daß das Flächengebilde eine Doppelmehrschichtfolie mit zwei innenliegenden, durch ein lösbares Haftmittel verbundenen Trägerschichten und darauf einander abgewendet angeordneten außenliegenden Siegelschichten darstellt.

5. Gekuppelte Schlauchhülie nach Ansprüchen 1 bis 4, dadurch gekennzeichnet, daß die nebeneinander verlaufenden Hüllenendstückkanten mit der gedachten Schlauchhüllenachse einen Winkel von 30° bis 60° bilden.

6. Gekuppelte Schlauchhülle nach Ansprüchen 1 bis 5, dadurch gekennzeichnet, daß die Schlauchhüllenendstückkanten mit der gedachten Schlauchhüllenachse einen Winkel von 45° bilden.

7. Gekuppelte Schlauchhülle nach Ansprüchen 1 bis 6, dadurch gekennzeichnet, daß das Flächengebilde ein parallelogrammförmige Kupplungsfolienstück darstellt, das von den Folienseitenkanten eingeschlossene Eckwinkel aufweist, deren Winkelbeträge denjenigen entsprechen oder sie zu 180° ergänzen die die durch Hüllenendstückkanten mit der gedachten Schlauchhüllenachse gebildeten Winkel aufweisen.

8. Verfahren zur Herstellung einer gekuppelten Schlauchhülle nach Ansprüchen 1 bis 7, dadurch gekennzeichnet, daß eine aus

1. gegebenenfalls coronabehandelter Polymerfolienträgerschicht,
2. darauf geschichtetem üblichen Haftvermittler und
3. darauf gegebenenfalls aus Dispersion oder Lösung aufgebrachter siegelfähiger Deckstrichschicht gebildete siegelfähige Mehrschichtfolie

a) entweder in dieser einseitig siegelfähigen Form oder

b) in durch trägerfolienseitige Belegung mit einem üblichen lösbaren Haftmittel unter haftmittelbedingtem Verbinden von aus zwei dieser einseitig siegelfähigen Folien entstandenen einen beidseitig siegelfähigen Duplofolienform

in geeignete Kupplungsfolienstücke zerlegt, dann einem Kupplungsfolienstück von beiden Seiten zwei miteinander zu verbindende, innen siegelfähige Schlauchhüllenendstücke aufgeschoben werden und darauf alle drei genannten Flächengebildekomponenten gegebenenfalls unter Anwendung von Druck und/oder Wärme miteinander zu einer so gekuppelten Schlauchhülle verbunden werden.

9. Verfahren nach Anspruch 8, dadurch gekennzeichnet, daß nach Aufschieben der beiden zu verbindenden Schlauchhüllenendstücke auf das Kupplungsfolienstück die haftfeste Verbindung der drei Hüllenkomponenten unter einer Siegeltemperatur von 110 bis 200 °C, einem Siegelanpreßdruck von 147 100 bis 588 400 Pa (1,5 bis 6 atü) während einer Siegelzeit von 8 bis 1 Sekunden unter Bildung einer Siegelfläche einer Breite von 10 bis 80 mm zu einer somit gekuppelten Schlauchhülle erfolgt.

10. Siegelvorrichtung zur Ausübung des Verfahrens nach Ansprüchen 8 und 9, dadurch gekennzeichnet, daß ein auf einer Unterlage (3) im Winkel von 10 bis 80° zur Förderrichtung (9) der zu kuppelnden Schlauchhüllenendstücke (1, 2) mittels Halteelementen (7a ; 7b) montiertes Siegelgerät mit druckbeaufschlagbaren (8a ; 8b) Siegeleinrichtungen (4a ; 4b ; 4al, 4bl) in Verbindung mit Schlauchhüllenführungselementen (5 ; 6) zwecks Schlauchhüllenflächenversiegelung beidseitig der Schlauchhüllenkanten (1b, 2b) unter Einschluß der Überlappungsbereiche (1a ; 2a) versehen ist.

11. Verwendung der gekuppelten Schlauchhülle nach Ansprüchen 1 bis 7 mit oder ohne Zwischenschaltung eines Schlauchhüllenraffprozesses als Verpackungsmittel zur Herstellung von abgebundenen verschlossenen leeren oder mit einzuhüllenden Gütern gefüllten Raumformein heiten, zur Herstellung von leeren und/oder gefüllten Schlauchketten, zur Herstellung von abgeteilten und vereinzelten, mit Nahrungsmitteln gefüllten Verpackungseinheiten, zur Herstellung von füllgutkonservierenden Verpackungseinheiten, zur Herstellung von Wurstattrappen oder zur Verpackung von technischen Gütern.

## Claims

1. Coupled tubular casing with a coupling piece (C, D, E) joining two adjacent seamless or seamed end pieces (1, 2) of tubular casing, which coupling piece overlaps two contiguous end pieces of tubular casing (1b, 2b) on the inside of the tubular casing, characterised in that the end edges of the end pieces (1, 2) of tubular casing form an angle of 10° to 80° with the envisaged axis of the tubular casing and in that the flat element forming the coupling piece (C, D, E) covers a coupling zone extending at an oblique angle to the axis of the tubular casing.

2. Coupled tubular casing according to Claim 1, characterised in that the flat element is a sealable foil.

3. Coupled tubular casing according to Claims 1 and 2, characterised in that the flat element is a multilayer foil having at least one supporting layer, at least one sealing layer and optionally at least one bonding layer.

4. Coupled tubular casing according to Claims 1 to 3, characterised in that the flat element is a double piece of multilayer foil having two internally situated supporting layers joined together by a soluble adhesive and externally situated sealing layers placed on the supporting layers and facing away from each other.

5. Coupled tubular casing according to Claims 1 to 4, characterised in that the contiguous edges of the two end pieces of tubular casing form an angle of 30° to 60° with the envisaged axis of the tubular casing.

6. Coupled tubular casing according to Claims 1 to 5, characterised in that the edges of the end pieces of tubular casing form an angle of 45° with the envisaged axis of the tubular casing.

7. Coupled tubular casing according to Claims 1 to 6, characterised in that the flat element is a

parallelogramshaped piece of coupling foil, which has angles at the corners enclosed by the side edges of the foil which are equal to or the supplement of the angles formed between the edges of the end pieces of the tube and the envisaged axis of the tubular casing.

8. Process for the preparation of a coupled tubular casing according to Claims 1 to 7, characterised in that a multilayer sealing foil formed from

    1. a supporting layer of polymer foil optionally treated with corona discharge,

    2. a conventional bonding agent coated on the aforesaid supporting layer and

    3. a top coat of sealing layer applied to layer 2, optionally from a dispersion or solution,

       a) either in the form described above, in which it can be sealed on one side only, or

       b) in the form of a duplofoil formed by applying a conventional soluble adhesive to the surface of the supporting foil ot two of the above described one sided sealing foils and joining them together so that the resulting foil can be sealed on both sides, — is cut up into suitable separate pieces of coupling foil and two end pieces of tubular casing which are to be joined together and which can be sealed on the inside are then placed over one piece of coupling foil and all of the three mentioned components of the flat element are then joined together to form a coupled tubular casing, optionally with the application of pressure and/or heat.

9. Process according to Claim 8, characterised in that after the two end pieces of tubular casing which are to be joined together have been placed over the piece of coupling foil, the three components of the casing are firmly bonded together at a sealing temperature of 110 to 200 °C and a sealing contact pressure of 147,100 to 588,400 Pa (1.5 to 6 excess atmospheres) for a time of 8 to 1 seconds to form a sealing surface having a width of 10 to 80 mm to form a coupled casing.

10. Sealing apparatus for carrying out the process according to Claims 8 and 9, characterised in that a sealing apparatus mounted by means of holders (7a ; 7b) on a support (3) at an angle of 10 to 80° to the direction of transport (9) of the end pieces of tubular casing (1, 2) to be coupled, is equipped with sealing devices (4a, 4b ; 4al, 4bl) designed to be pressure operated (8a ; 8b) together with guiding elements (5 ; 6) for the tubular casing for the purpose of surface sealing the tubular casing on either side of the edges (1b, 2b) of the tubular casing, including areas of overlapping (1a ; 2a).

11. Use of the coupled tubular casing according to Claims 1 to 7, which use is preceded or not by a process of tucking the casing, as packaging material for producing closed, tiedoff volumetric units, either empty or filled with goods which require to be wrapped, for the production of empty and/or filled tube chains, for the production of subdivided and individualised packaging units filled with foodstuffs, for the production of packaging units used to preserve the contents with which they are filled, for the production of dummy sausages, or for packaging technical goods.

## Revendications

1. Gaine tubulaire accouplée, avec une pièce d'accouplement (C, D, E), laquelle raccorde avec forte adhérence deux pièces d'extrémité de gaines tubulaires avoisinantes (1, 2) sans jointure ou contenant une jointure et qui chevauche deux arêtes de pièces d'extrémité de gaine (1b, 2b) courant côte à côte sur le côté intérieur des gaines tubulaires, caractérisée en ce que les arêtes terminales des pièces d'extrémité des gaines tubulaires (1, 2) forment avec l'axe imaginaire des gaines tubulaires un angle de 10° à 80° et en ce que l'article à grande surface constituant la pièce d'accouplement (C, D, E) couvre un intervalle de la zone d'accouplement suivant un cours oblique par rapport à l'axe des gaines tubulaires.

2. Gaine tubulaire accouplée selon la revendication 1, caractérisée en ce que l'article à grande surface est une feuille scellable.

3. Gaine tubulaire accouplée selon les revendications 1 et 2, caractérisée en ce que l'article à grande surface est une feuille à couches multiples comportant au moins une couche de support, au moins une couche de scellage et éventuellement au moins une couche promotrice d'adhérence.

4. Gaine tubulaire accouplée selon les revendications 1 à 3, caractérisée en ce que l'article à grande surface est une feuille à couches multiples double avec deux couches de support internes reliées par un adhésif détachable et sur celles-ci des couches de scellage externes qui se tournent mutuellement le dos.

5. Gaine tubulaire accouplée selon les revendications 1 à 4, caractérisée en ce que les arêtes des pièces d'extrémité de gaines courant côte à côte forment avec l'axe imaginaire de la gaine tubulaire un angle de 30° à 60°.

6. Gaine tubulaire accouplée selon les revendications 1 à 5, caractérisée en ce que les arêtes des pièces d'extrémité de gaines tubulaires forment avec l'axe imaginaire de la gaine tubulaire un angle de 45°.

7. Gaine tubulaire accouplée selon les revendications 1 à 6, caractérisée en ce que l'article à grande surface est une pièce feuilletée d'accouplement en forme de parallélogramme qui présente des cornières incluses par les arêtes latérales des feuilles, dont les contributions angulaires correspondent ou complètent à 180° celles que présentent les angles formés par les arêtes des pièces d'extrémité de gaine avec l'axe imaginaire des gaines tubulaires.

8. Procédé de fabrication d'une gaine tubulaire accouplée selon les revendications 1 à 7, caractérisé en ce qu'une feuille à couches multiples scellable formée

1. d'une couche de support en feuille polymère éventuellement prétraitée par effet corona,

2. d'un promoteur d'adhérence usuel appliqué en couche sur celle-ci et éventuellement

3. d'une couche enduite de recouvrement scellable appliquée par-dessus à partir d'une dispersion ou d'une solution,

    a) soit sous cette forme scellable d'un seul côté ou

    b) sous forme d'une feuille Duplo scellable des deux côtés obtenue par l'application côté feuille de support d'un adhésif détachable usuel avec union causée par l'adhésif de deux de ces feuilles scellables d'un seul côté,

est partagée en pièces feuilletées d'accouplement appropriées, en ce qu'ensuite sur une pièce feuilletée d'accouplement sont glissées deux pièces d'extrémité de gaines tubulaires qui sont scellables intérieurement et qui sont à raccorder ensemble des deux côtés et en ce qu'après ceci tous les trois composants de l'article à grande surface cités sont reliés entre eux en une gaine tubulaire ainsi accouplée, éventuellement avec application d'une pression et/ou de chaleur.

9. Procédé selon la revendication 8, caractérisé en ce qu'après glissement des deux pièces d'extrémité de gaines tubulaires à raccorder sur la pièce feuilletée d'accouplement, la liaison fortement adhérente des trois composants de gaine se fait à une température de scellage de 110 à 200 °C, sous une pression de compression de scellage de 147 100 à 588 400 Pa (1,5 à 6 atm.) pendant une durée de scellage de 8 à 1 secondes, avec formation d'une surface de scellage d'une largeur de 10 à 80 mm pour obtenir une gaine tubulaire ainsi accouplée.

10. Appareil de scellage pour la mise en œuvre du procédé selon les revendications 8 et 9, caractérisé en ce qu'un instrument de scellage qui est monté sur une base (3) suivant un angle de 10 à 80° par rapport à la direction de transport (9) des pièces d'extrémité de gaines tubulaires à accoupler (1, 2) au moyen d'éléments de retenue (7a ; 7b), est muni de dispositifs de scellage (4a ; 4b ; 4al, 4bl) alimentables en pression (8a ; 8b) en liaison avec des éléments de guidage de gaine tubulaire (5 ; 6) en vue du scellage des surfaces de gaine tubulaire des deux côtés des arêtes de gaine tubulaire (1b, 2b) avec inclusion des intervalles de chevauchement (1a ; 2a).

11. Utilisation de la gaine tubulaire accouplée selon les revendications 1 à 7 avec ou sans intercalation d'un processus de retroussement de la gaine tubulaire comme article d'emballage pour la fabrication d'unités moulées spatiales ligaturées et fermées, vides ou remplies, de produits à emballer, pour la fabrication de chapelets de boyaux vides et/ou remplis, pour la fabrication d'unités d'emballage compartimentées et individualisées remplies de produits alimentaires, pour la fabrication d'unités d'emballage avec conservation du produit de remplissage, pour la fabrication de saucisses-attrapes ou pour l'emballage de produits techniques.

# Fig 1

## Fig 2

## Fig 3

FIG. 4

FIG. 5